# EUROPEAN PATENT APPLICATION

(11) **EP 4 620 296 A1**
(43) Date of publication of application: **24.09.2025**
(21) Application number: 23903800.3
(22) Date of filing: 21.11.2023
(51) Int. Cl.: A01G 31/02, A01G 13/08, A01G 7/04, A01G 13/04

(54) **PLANT GROWING DEVICE**

(30) Priority: 12.12.2022 KR 20220172254
(71) Applicant: LG Electronics Inc., Yeongdeungpo-gu Seoul 07336 (KR)
(72) Inventor: LEE, Taeyun, Seoul 08592 (KR); CHOI, Jungeun, Seoul 08592 (KR); RYU, Inhwan, Seoul 08592 (KR)
(74) Representative: Ter Meer Steinmeister & Partner
(86) International application number: PCT/KR2023/018763
(87) International publication number: WO 2024/128597

(57) **Abstract**

A plant cultivating apparatus according to an embodiment of the present invention comprises: a body in which a cultivation space is formed; a water storage unit provided in the body; a humidification module provided on one side of the body separated from the cultivation space; a water supply module for supplying water from the water storage unit to the humidification module; an inlet duct connected to one side of the humidification module to supply air to the humidification module; an outlet duct connected to the other side of the humidification module and discharging air which has passed through the humidification module into the cultivation space; and a fan provided in the body to force air flow in the humidification module, the inlet duct, and the outlet duct, wherein at the time of operating the fan, the air introduced through the inlet duct is humidified while passing through the humidification module and then supplied to the cultivation space through the outlet duct.

## Description

### TECHNICAL FIELD

The present invention relates to a plant cultivating apparatus.

### BACKGROUND ART

A typical plant cultivating apparatus forms a predetermined cultivation room that provides an environment suitable for the growth of plants, and stores plants inside the predetermined cultivation room. The plant cultivating apparatus is provided with a configuration to supply water, nutrients and light, which are necessary for plant growth, and the plants are grown by the supplied water, nutrients and light.

A plant cultivating apparatus using conventional technologies is disclosed in Korean Patent No. 10-1240375. In this related art, a structure in which a supply tube that supplies water and nutrients to a tray, in which a plant is grown, is provided to supply the water that is necessary for plant cultivation is disclosed.

However, in this related art, there is a problem in that, even though the water is directly supplied to the plant, it is not effective in adjusting humidity within a space in which the plant is grown to cause poor plant growth.

### DISCLOSURE OF THE INVENTION

### TECHNICAL PROBLEM

An object of an embodiment of the present invention is to provide a plant cultivating apparatus that improves a plant cultivation environment by adjusting humidity in a plant cultivation space.

An object of an embodiment of the present invention is to provide a plant cultivating apparatus capable of adjusting internal humidity of a cultivation space together with introduction of external air.

An object of an embodiment of the present invention is to provide a plant cultivating apparatus capable of adjusting humidity of a cultivation space by using water supplied for cultivation.

### TECHNICAL SOLUTION

A plant cultivating apparatus according to an embodiment of the present invention includes: a body in which a cultivation space is defined; a water storage unit provided in the body; a humidification module provided at one side of the body that is separated from the cultivation space; a water supply module configured to supply water from the water storage unit to the humidification module; an inlet duct connected to one side of the humidification module to supply air to the humidification module; an outlet duct connected to the other side of the humidification module to discharge air passing through the humidification module to the cultivation space; and a fan provided in the body to force an air flow in the humidification module, the inlet duct, and the outlet duct, wherein, when the fan is driven, the air introduced through the inlet duct is humidified while passing through the humidification module and then is supplied to the cultivation space through the outlet duct.

The humidification module may include a filter into which the water supplied from the water storage unit is absorbed.

An outlet of the water supply module may be provided above the filter to supply the water downward.

The humidification module may be disposed between the inlet duct and the outlet duct, and the outlet duct and the inlet duct may be disposed in a direction crossing a flowing direction of the water flowing along the filter.

The water storage unit may include a tray part recessed from a top surface of the body and exposed to the cultivation space so that a plate to be grown is disposed, and the water supply module may be connected to the tray part.

An external air inflow hole through which air outside the body is introduced into the inlet duct may be defined in one surface of the body, and a discharge hole through which humidified air of the outlet duct is supplied into the cultivation space may be defined in the other surface of the body, which is in contact with the cultivation space.

The humidification module may include: a case in which the water supplied from the water supply module is stored; and a filter accommodated in the case to absorb the water supplied from the water supply module, wherein a case opening through which the filter is exposed may be defined in each of both facing surfaces of the case, and the case opening may communicate with each of the inlet duct and the outlet duct.

A filter cover having a plurality of holes, through which water discharged from the water supply module passes, may be provided above the filter, wherein the filter cover may be provided to be gradually lower toward both sides from a central portion facing an outlet of the water supply module.

A body opening, through which the case is exposed, may be defined at one side of the body, and the case may be inserted and withdrawn through the body opening.

The body may include: a lower body on which the tray part is disposed; an upper body disposed to be spaced upward from the lower body and provided with a lighting device configured to illuminate light toward the lower body; and a frame configured to connect the upper body to the lower body, wherein the cultivation space may be defined between the upper body and the lower body.

A cover made of a transparent material may be provided between the upper body and the lower body, wherein the cover may be configured to shield at least a portion of the cultivation space.

The water supply module and the humidification module may be provided inside the lower body, and the inlet duct and the outlet duct may be provided in the lower body, wherein an inlet of the inlet duct may be provided in a side surface of the lower body, and an outlet of the outlet duct may be provided in a top surface of the lower body.

The water supply module may be provided in the lower body, wherein tubes constituting the water supply module pass through the frame and are guided to the upper body, the humidification module, the inlet duct, and the outlet duct may be provided in the upper body, and an inlet of the inlet duct and an outlet of the outlet duct may be provided in the upper body.

The water supply module, the humidification module, and the inlet duct may be provided in the lower body, the outlet duct may include a first guide part disposed in the lower body, a second guide part passing through the frame, and a third guide part disposed in the upper body, and an inlet of the inlet duct may be provided in the lower body, and an outlet of the outlet duct may be provided in the upper body.

The plant cultivating apparatus may further include a tray part recessed from a top surface of the body and exposed to the cultivation space, wherein the water storage unit may include a water tank disposed independently of the tray part, and the water supply module may be connected to the water tank.

In another aspect, a plant cultivating apparatus according to an embodiment of the present invention includes: a body in which a cultivation space is defined; at least one or more tray parts which are provided on the body and in which a plant to be grown is disposed, and water is supplied; a water supply module configured to drain the water of the tray parts; and a humidification module provided in the body and configured to discharge humidified air into a cultivation space using the water supplied through the water supply module.

The plant cultivating apparatus may further include: an inlet duct through which the outside of the body and the humidification module communicate with each other to allow external air to be introduced; an outlet duct through which the cultivation space and the humidification module communicate with each other to supply the humidified air into the cultivation space; and a fan provided between the inlet duct and the outlet duct, wherein the fan may be configured to force a flow of the external air so that the external air introduced through the inlet duct is humidified while passing through the humidification module and then is supplied into the cultivation space through the outlet duct.

The humidification module may include: a case in which the water supplied from the water supply module is stored; and a filter accommodated in the case to absorb the water supplied from the water supply module, wherein a case opening through which the filter is exposed may be defined in each of both facing surfaces of the case, and the case opening may communicate with each of the inlet duct and the outlet duct.

A filter cover having a plurality of holes, through which water discharged from the water supply module passes, may be provided above the filter, wherein the filter cover may be provided to be gradually lower toward both sides from a central portion facing an outlet of the water supply module.

A body opening, through which the case is exposed, may be defined at one side of the body, and the case may be inserted and withdrawn through the body opening.

The body may include: a lower body on which the tray part is disposed; an upper body disposed to be spaced upward from the lower body and provided with a lighting device configured to illuminate light toward the lower body; and a frame configured to connect the upper body to the lower body, wherein the cultivation space may be defined between the upper body and the lower body.

A cover made of a transparent material may be provided between the upper body and the lower body, wherein the cover may be configured to shield at least a portion of the cultivation space.

The water supply module and the humidification module may be provided inside the lower body, and the inlet duct and the outlet duct may be provided in the lower body, wherein an inlet of the inlet duct may be provided in a side surface of the lower body, and an outlet of the outlet duct may be provided in a top surface of the lower body.

The water supply module may be provided in the lower body, wherein tubes constituting the water supply module pass through the frame and are guided to the upper body, the humidification module, the inlet duct, and the outlet duct may be provided in the upper body, and an inlet of the inlet duct and an outlet of the outlet duct may be provided in the upper body.

The water supply module, the humidification module, and the inlet duct may be provided in the lower body, the outlet duct may include a first guide part disposed in the lower body, a second guide part passing through the frame, and a third guide part disposed in the upper body, and an inlet of the inlet duct may be provided in the lower body, and an outlet of the outlet duct may be provided in the upper body.

### ADVANTAGEOUS EFFECTS

The plant cultivating apparatus according to the proposed embodiment may be expected to have the following effects.

The plant cultivating apparatus according to the embodiment of the present invention may be expected to have the effect of improving the plant cultivation environment by supplying the humidified air to the inside of the cultivation space through the operation of the humidification module.

Particularly, it may be expected that the convenience of use is improved by enabling the humidification using the water supplied to the tray in which the plants are grown, rather than supplying the separate water for the humidification.

In addition, there may be the advantage in that the water remaining after the humidification is stored in the case of the humidification module to enable the efficient humidification and facilitate the disposal of the water remaining after the humidification.

In addition, the humidification efficiency may be improved by effectively supplying the water from the tray part to the humidification module by the water supply module. Particularly, there may be the advantage in that the water supply module is disposed above the humidification module to supply the water to the humidification module by its own weight, thereby simplifying the water supply module.

In addition, when the humidification module is driven, the fan may be driven to introduce the external air through the inlet duct, and the air may be supplied to the cultivation space while passing through the humidification module and the inlet duct in sequence. That is, since the external air is introduced into the cultivation space while humidifying the cultivation space, there may be the advantage in that the ventilation and the supply of carbon dioxide necessary for the plant growth are facilitated.

### BRIEF DESCRIPTION OF THE DRAWINGS

FIG. 1 is a perspective view of a plant cultivating apparatus according to a first embodiment of the present invention.
FIG. 2 is a partial perspective view illustrating the inside of a lower body of the plant cultivating apparatus.
FIG. 3 is a perspective view of a humidification module.
FIG. 4 is an exploded perspective view of the humidification module.
FIG. 5 is a cutaway perspective view taken along line V-V' of FIG. 3.
FIG. 6 is a cross-sectional view illustrating a humidified state of the plant cultivating apparatus.
FIG. 7 is a perspective view of a plant cultivating apparatus according to a second embodiment of the present invention.
FIG. 8 is a partial perspective view illustrating an internal structure of a lower body of the plant cultivating apparatus.
FIG. 9 is a partial perspective view illustrating an internal structure of an upper body of the plant cultivating apparatus.
FIG. 10 is a cross-sectional view illustrating a humidified state of the plant cultivating apparatus.
FIG. 11 is a perspective view of a plant cultivating apparatus when viewed from the rear according to a third embodiment of the present invention.
FIG. 12 is a partial perspective view illustrating an internal structure of a lower body of the plant cultivating apparatus.
FIG. 13 is a partial perspective view illustrating a water supply structure of a humidification module of the plant cultivating apparatus.
FIG. 14 is a partial perspective view illustrating an internal structure of an upper body of the plant cultivating apparatus.
FIG. 15 is a cross-sectional view illustrating a humidified state of the plant cultivating apparatus.
FIG. 16 is a cross-sectional view illustrating a structure and a humidified state of a plant cultivating apparatus according to a fourth embodiment of the present invention.

### MODE FOR CARRYING OUT THE INVENTION

Hereinafter, detailed embodiments will be described in detail with reference to the accompanying drawings. However, the scope of the present disclosure is not limited to proposed embodiments of the present invention, and other regressive inventions or other embodiments included in the scope of the spirits of the present disclosure may be easily proposed through addition, change, deletion, and the like of other elements.

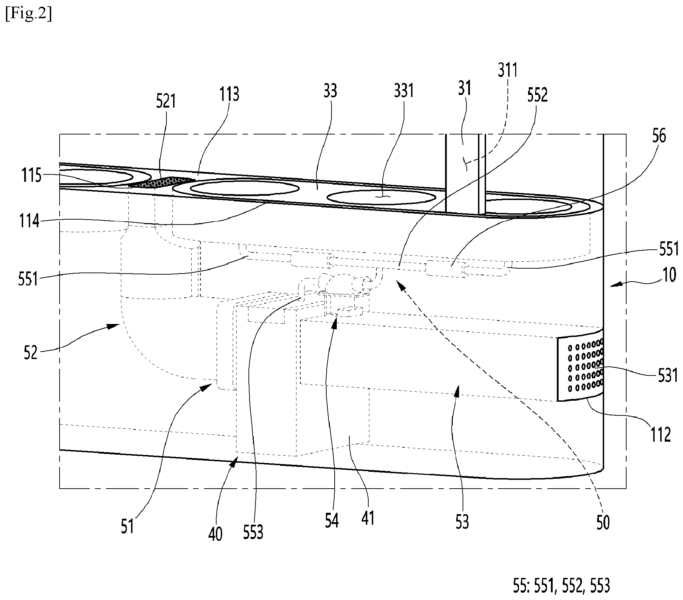

Before explaining, directions will be defined. In the following descriptions, a direction in which a front cover of a plant cultivating apparatus illustrated in FIG. 2 is disposed may be defined as a forward direction, a direction in which a rear cover is disposed may be defined as a backward direction, a direction in which an upper body is disposed may be defined as a downward direction, a direction in which a lower body is disposed may be defined as a downward direction, and a direction in which a side cover is disposed may be defined as a left and right direction. Alternatively, if necessary, the directions may be redefined and explained, but unless otherwise description, it will be explained according to the definition of the direction as described above.

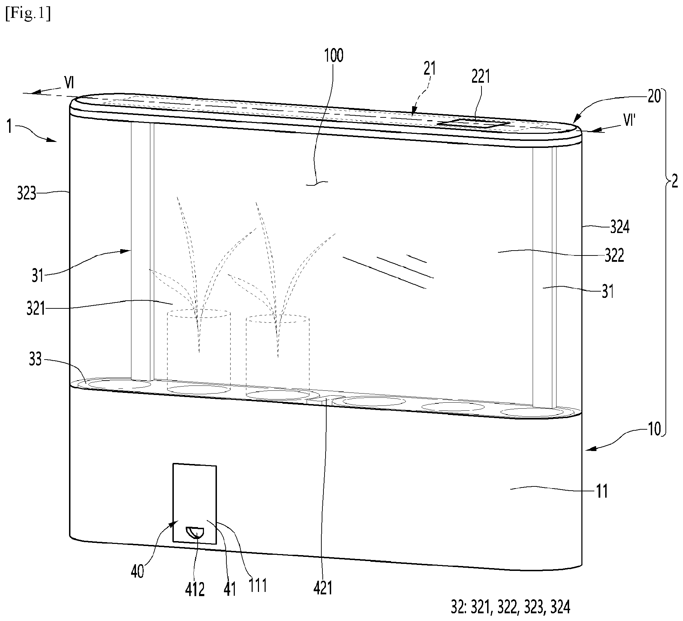

FIG. 1 is a perspective view of a plant cultivating apparatus according to a first embodiment of the present invention.

As illustrated in the drawings, a plant cultivating apparatus 1 according to an embodiment of the present invention may include a body 2 defining a cultivation space 100 in which a plant is cultivated. In addition, the body 2 may include a lower body 10 and an upper body 20.

The lower body 10 may extend in the left and right direction. The lower body 10 may be provided so that a length between left and right sides is greater than a width in a forward and backward direction. The lower body 10 define a bottom surface of the plant cultivating apparatus 1, and a cultivation plant may be disposed thereon. In detail, a tray part 33 may be provided on a top surface 113 of the lower body 10.

The tray part 33 may be configured to seat a container for plant cultivation or a package or pod containing seeds and media. In addition, an accommodation groove 331 may be defined in the tray part 33 so that the plant to be cultivated may be directly disposed therein, or the container or pad may be disposed therein. Water may be supplied to the tray part 33, and the water may be supplied into the accommodation groove 331 to directly or indirectly supply the water to the cultivation plant.

The tray part 33 may be provided detachably to the lower body 2. In addition, when the tray part 33 is mounted in a tray opening 114 of the top surface 113 of the lower body 2, the top surface of the tray part 33 may form the same plane as the top surface of the lower body 2. In addition, the accommodation groove 331 may be exposed through a top surface of the lower body 2.

In an embodiment of the present invention, an example in which three accommodation grooves 331 are defined in the tray part 33 is described, but the tray part 33 is not limited thereto and may have various shapes capable of containing the water and disposing the cultivation plant.

In addition, a plurality of tray parts 33 may be provided on the top surface of the lower body 2. For example, two trays 33 may be disposed in series. In addition, a discharge hole 521 to be described below may be disposed between the tray parts 33 at both sides. Here, the position of the discharge hole 521 may be a center of the top surface of the lower body 2. An end of an outlet duct 52 may be exposed to a cultivation space 100 through a discharge opening 115 defined in the top surface 113 of the lower body 2.

Various configurations including a humidification module 40 may be disposed in an internal space 110 of the lower body 2. An internal structure of the lower body 2 will be described in more detail below.

In addition, a body opening 111 through which a portion of the humidification module 40 is exposed may be defined in the lower body 2. A case 41 constituting the humidification module 40 may be exposed through the body opening 111. In addition, at least a portion of the humidification module 40 may enter through the body opening 111. Thus, it is possible to easily replace or clean a filter 43 inside the humidification module 40 without disassembling the lower body 2.

The upper body 20 may be provided above the lower body 10 and may define a top surface of the plant cultivating apparatus 1. In addition, a size of the bottom surface of the upper body 20 may be provided to correspond to a size of the top surface of the lower body 10.

The cultivation space 100 may be defined between the lower body 2 and the upper body 2. The cultivation space 100 may be a space in which cultivation is actually performed and may be shielded by a cover 32. In addition, the cover 32 may shield a space between the lower body 2 and the upper body 2. That is, an outer appearance of the plant cultivating apparatus 1 may be defined by the lower body 2, the upper body 2, and the cover 32. In addition, the cover 32 may be made of a transparent material so that the inside of the cultivation space 100 is seen therethrough. In addition, the cover 32 may be provided in plurality, and at least a portion of the plurality of covers 32 may be provided to be openable or detachable.

For example, the cover 32 may include a front cover 321 that shields a front surface of the cultivation space, a rear cover 322 that shields a rear surface of the cultivation space, and side covers 323 and 324 that shield left and right side surfaces of the cultivation space.

In addition, the side cover 323 and 324 may be provided to be detachable. Thus, the side covers 323 and 324 may be separated for the work of putting or taking a plant out of the cultivation space 100 and supplying water.

In addition, the upper body 2 may be provided with a lighting device 21 that irradiates light toward the cultivation space 100. The lighting device 21 may be disposed on the bottom surface of the upper body 2. The lighting device 21 and the top surface of the lower body 2 may be disposed to face each other so that the light irradiated from the lighting device 21 may be irradiated to the cultivation plant disposed in the tray part 33.

In addition, a manipulation part 221 may be disposed on the top surface of the upper body 2. The manipulation part 221 may be configured to manipulate an operation of the plant cultivating apparatus 1 and may control an operation of the lighting device 21 or the humidification module 40.

The plant cultivating apparatus 1 may further include a frame 31. The frame 31 may connect the upper body 20 to the lower body 10. The frame 31 may be disposed in pair at left and right sides. In addition, the frame 31 may connect a rear end of the top surface of the lower body 10 and a rear end of the bottom surface of the upper body 20. In addition, the frame 31 may be disposed on each of left and right ends of the rear surfaces of the lower body 10 and the upper body 20. In addition, the frame 31 may be fixed to a wall, and the plant cultivating apparatus 40 may be mounted in a shape of being hung on the wall.

The frame 31 may have a hollow 311 therein. Thus, the inside of the lower body 10 and the inside of the upper body 20 may communicate with each other through the frame 31. In addition, an electric wire 312 may be disposed on at least one side of the frame 31 disposed at each of the left and right sides. That is, the electric wire may be guided from the lower body 10 to the upper body 20 through the frame 31. In addition, the electric wire 312 may be connected to an electric component provided inside the upper body 20 to supply power. For example, the electric wire 312 may be connected to the lighting device 21.

Hereinafter, the structure of the lower body 2 will be described in more detail with reference to the drawings.

FIG. 2 is a partial perspective view illustrating the inside of the lower body of the plant cultivating apparatus.

As illustrated in the drawings, the lower body 2 may define a lower portion of the plant cultivating apparatus 1. In addition, the tray part 33 may define a portion of the top surface of the lower body 2. The humidification module 40, the inlet duct 53, and the outlet duct 52 may be provided in the internal space 110 of the lower body 2.

In detail, the water supply module 50 may be configured to drain the water stored in the tray part 33 and supply the water to the humidification module 40, and may be provided below the tray part 33. In addition, the water supply module 50 may include a tube 55 connected to the tray part 33 and a valve 54 that opens and closes the tube 55.

When the tray part 33 is provided in plurality, the tube 55 may also be provided in plurality. In addition, the tube 55 may be branched and connected to each of the tray parts 33. In addition, a tube connection part 332 to which an end of the tube 55 is connected may be provided on the bottom of the tray part 33.

In detail, the tube 55 may include a connection tube 551 connected to the tube connection part 332, a branch tube 552 in which a plurality of connection tubes 551 are connected to one tube, and a water discharge tube 553 connected to the valve 54 to supply water to the humidification module 40. In addition, the tubes 551, 552, and 553 may be connected to each other by a fitting 56.

In addition, the valve 54 may be connected to the tube 55. The valve 54 may open and close the tube 55 to selectively supply the water to the humidification module 40. For example, the valve 54 may be normally maintained in a closed state and may be opened when the humidification module 40 is in operation.

The humidification module 40 may be connected to only one of the plurality of tray parts 33. In addition, since the water stored in the tray part 33 is supplied to the humidification module 40, the tray part 33 may be called a water storage unit.

An outlet of the water supply module 50, i.e., an outlet of the water discharge tube 553, may be disposed vertically above the humidification module 40. Thus, the water discharged from the water supply module 50 may fall toward the top surface of the humidification module 40.

The humidification module 40 may include a case 41 and a filter 43. The case 41 may store the water that is drained through the water supply module 50. The filter 43 may be accommodated with the case 41, and the water discharged through the water supply module 50 may pass through the filter 43. In this process, the filter 43 may absorb the water.

In addition, the humidification module 40 may further include a fan 51. The fan 51 may be provided at one side of the case 41. The fan 51 may generate an air flow and may allow an introduction of external air, a passage of the external air through the humidification module 40, and supply of humidified air to the cultivation space 100.

The fan 51 may be provided at one side of the case 41 and disposed at a position corresponding to the case opening 413a described below so that the introducing air is humidified while passing through the filter 43. That is, the humidification module 40 may constitute an evaporative humidifier.

The inlet duct 53 may allow air outside the plant cultivating apparatus 1 to be introduced. In addition, the inlet duct 53 may connect an outer surface of the lower body 2 to the case 41. An inlet of the inlet duct 53 may be exposed to the side surface of the lower body 2. That is, an external air inflow hole 531 may be provided in the side surface of the lower body 2, and the external air inflow hole 531 may communicate with the inlet of the inlet duct 53. The external air inflow hole 531 may be exposed through the opening 112 of the lower body 10. In addition, an outlet of the inlet duct 53 may communicate with the case opening 413b. Thus, the external air introduced into the inlet duct 53 may be directed to the filter 43. The external air inflow hole 531 may be provided in a grill or mesh shape and may also be integrated with the inlet duct 53.

The fan 51 may be disposed between the inlet of the outlet duct 52 and the case 41. The fan 51 may be provided in a box fan structure, and an input side of the fan 51 may be connected to the case opening 413a. In addition, the inlet of the outlet duct 52 may communicate with an output side of the fan 51. In addition, the outlet of the outlet duct 52 may be connected to a discharge hole 521 of the top surface of the lower body 2. The humidified air may be supplied to the cultivation space 100 through a discharge hole 521.

The outlet duct 52 may be disposed in a direction in which the inlet and outlet intersect each other. In addition, the outlet duct 52 may be provided to be bent. In addition, the outlet of the outlet duct 52 may have a size less than that of the inlet. The outlet of the outlet duct 52 may be provided in a shape corresponding to that of the discharge hole 521. In addition, the discharge hole 521 may be provided in a grill or mesh shape and may be integrated with the outlet duct 52.

The humidification module 40, the inlet duct 53, the outlet duct 52, and the fan 51 may be called a humidifying device or an evaporative humidifying device.

Hereinafter, the structure of the humidification module 40 will be described in more detail with reference to the drawings.

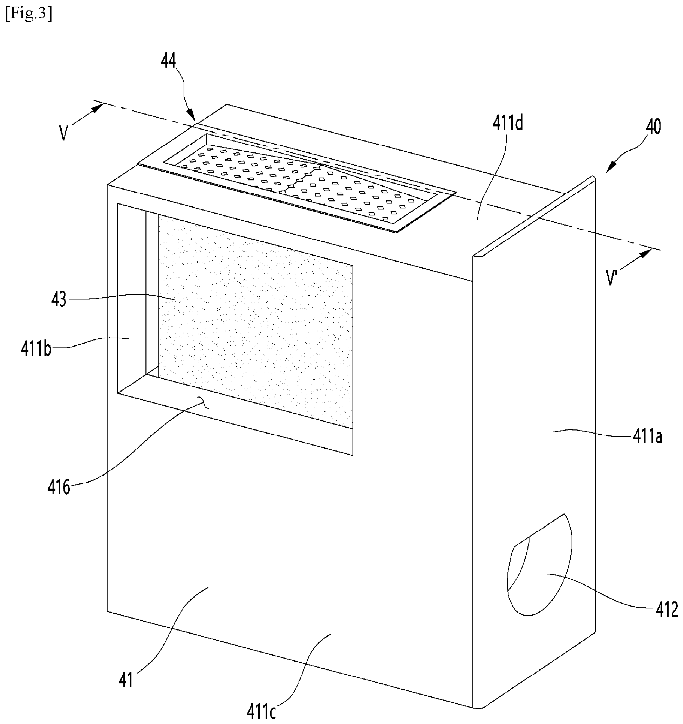

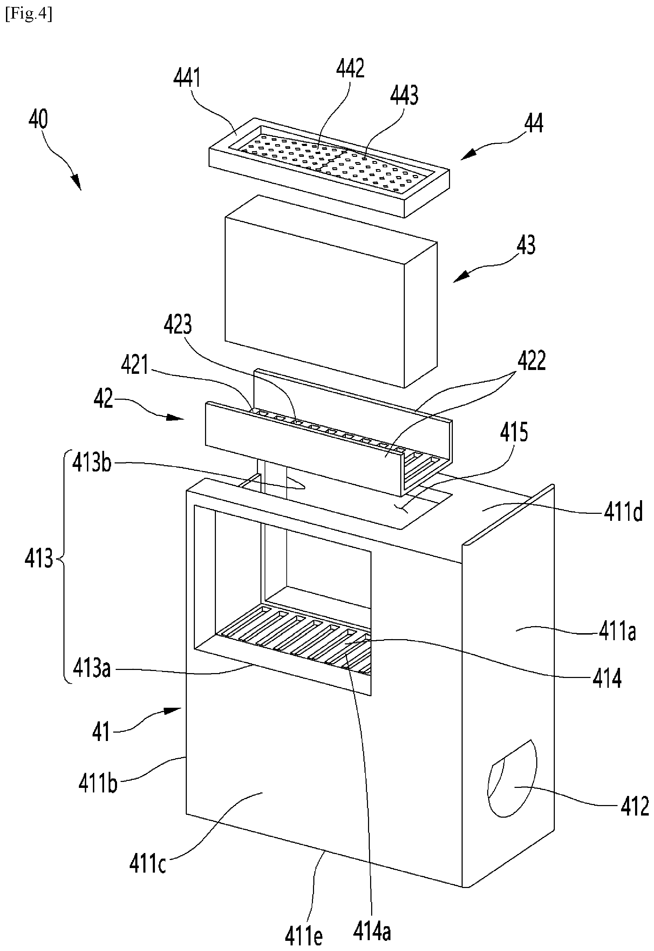

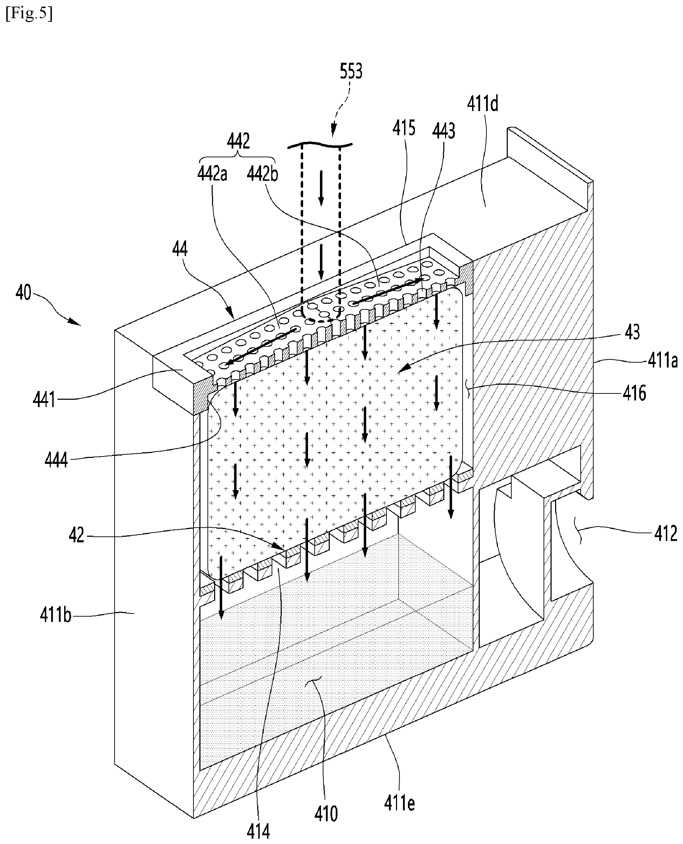

FIG. 3 is a perspective view of the humidification module. In addition, FIG. 4 is an exploded perspective view of the humidification module. In addition, FIG. 5 is a cutaway perspective view taken along line V-V' of FIG. 3.

As illustrated in the drawings, the humidification module 40 may include the case 41 in which water is stored and the filter 43 accommodated inside the case 41.

In detail, the case 41 may include a front surface 411a, a rear surface 411b, a top surface 411d, a bottom surface 411e, and left and right surfaces 411c. The front surface of the case 41 may be exposed through the body opening 111. In addition, a handle 412 may be recessed in the front surface of the case 41. Thus, a user may separate the humidification module 40 from the lower body 2 by withdrawing the front surface of the case 41 exposed through the body opening 111. The humidification module 40 may be simply detached and mounted from the lower body 2 without disassembling the lower body 2 to ensure convenience in cleaning or maintenance of the humidification module 40.

The case opening 413 may be defined in each of both left and right surfaces of the case 41. The case opening 413 may be defined so that at least a portion of the filter 43 is exposed. The case opening 413 may be defined at a position higher than a full water level of the case 41. For example, the case opening 413 may be defined to be in contact with an upper end of the side surface of the case 41.

A filter seating part 414 may be provided inside the case 41. The filter seating part 414 may support the filter 43 from the below and may partition the inside of the case 41 into upper and lower parts. In the case 41, a filter accommodation space 416, which are defined at the upper side, and a water accommodation space 410, which is defined at the upper side, may be defined with respect to the filter seating part 414. In addition, a plurality of holes 414a may be defined in the filter seating part 414 so that the water passing through the filter 43 is guided to the water accommodation space 410.

In addition, a filter opening 415 may be defined in the top surface of the case 41. The filter opening 415 may be defined to be the same size as or greater than a size of the filter 43 to allow the filter 43 to enter. In the state in which the filter 43 is mounted, the top surface of the filter 43 may be disposed in the filter opening 415.

In addition, the humidification module 40 may further include a filter cover 441. The filter cover 441 may be configured to shield the filter opening 415. In addition, the filter cover 441 may shield the top surface of the filter 43. The filter cover 441 may be provided so that a central portion thereof protrudes upward and be inclined to be gradually lower from a center of the filter cover 441 toward each of both sides. That is, inclined surfaces 442 may be disposed to be inclined in opposite directions with respect to the center of the filter cover 441.

In addition, a plurality of cover holes 443 may be defined in the inclined surfaces 442 so that the water discharged from the water supply module 50 flows along the inclined surfaces 442 and is evenly supplied to the filter 43. In addition, foreign substances contained in the water supplied through the water supply module 50 may be filtered.

Here, the outlet of the water supply module 50 may be disposed vertically upward corresponding to the central portion of the filter cover 441. The outlet of the water supply module 50 may be maintained to be separated from the humidification module 40 to prevent interference when the humidification module 40 is inserted and withdrawn.

A cover edge 441 may be disposed on a circumference of the filter cover 441. The cover edge 441 may protrude in a vertical direction. Thus, water supplied to the top surface of the filter cover 441 may be discharged downward through the inclined surface 442. In addition, the top surface of the filter 43 may be inserted into a lower space of the filter cover 441, which is defined by the cover edge 441.

In addition, a support member 42 may be further provided on the bottom surface of the filter 43. The support member 42 may be provided to surround a lower portion including the bottom surface of the filter 43. For example, the support member 42 may include a support member bottom surface 421 that supports the bottom surface of the filter 43 and a support member side surface 422 that extends upward from each of both ends of the support member bottom surface 421 and is in contact with each of both left and right surfaces of the filter 43. Thus, a lower end of the filter 43 may be fitted into the support member 42. In addition, the support member 42 may be made of a plastic or metal material to prevent the filter 43 made of a relatively soft material from being damaged. In addition, a plurality of holes 423 may be defined in a bottom surface of the support member 42, and at least a portion of the plurality of holes 423 may overlap a hole 414a defined in the filter seating part 414, and thus, the water passing through the filter 43 may move downward.

The filter 43 may be provided to a size that is capable of being accommodated inside the case 41. For example, the filter 43 may be provided in a hexahedral shape. In addition, the filter 43 may be provided so that an area in a direction in which air flows is greater than that in a direction in which water is supplied. Thus, the filter 43 may enable smooth air flow and also secure a sufficient amount of humidified air.

In addition, the filter 43 may be made of a material capable of absorbing the water supplied from the upper side. For example, the filter 43 may be made of a porous material such as a sponge, fabric, or be provided in a net structure or a mesh structure. The filter 43 may be provided so that water is absorbed and move, and air also passes through the filter 43.

Hereinafter, the operation of the plant cultivating apparatus 1 having the structure described above will be examined with reference to the drawings.

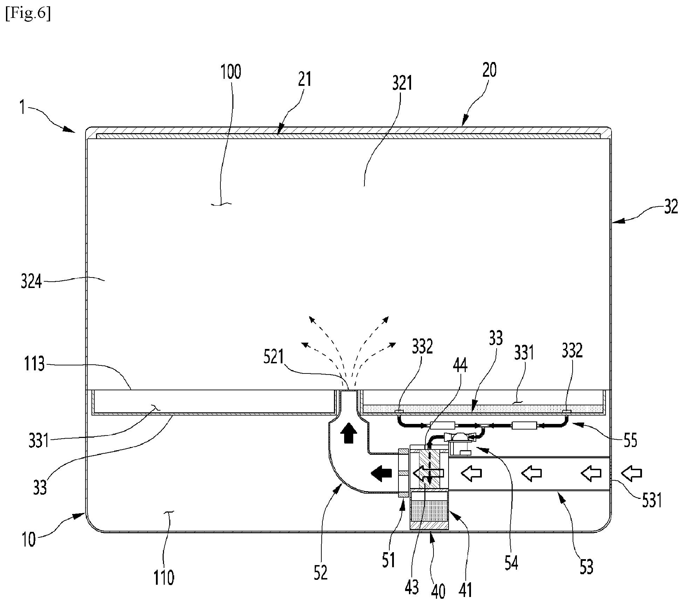

FIG. 6 is a cross-sectional view illustrating a humidified state of the plant cultivating apparatus.

As illustrated in the drawings, the plant cultivating apparatus 1 may supply water to the tray part 33 for cultivation of plants. In addition, a plant for cultivation may be disposed in the tray part 33.

The water stored in the tray part 33 is used for growing plants, but may be supplied to the humidification module 40 in situations in which humidification is required. The situation requiring the humidification may be determined through a user's input from the manipulation part 221 or may be determined by a humidity sensor (not shown) that detects the humidity of the cultivation space 100.

When the operation of the humidification module 40 is determined, the valve 54 may be opened. When the valve 54 is opened, the water stored in the tray part 33 moves downward along the tube 55.

In addition, the outlet of the water discharge tube 553 is disposed above the filter cover 441 to supply the water toward the filter 43. The water discharged from the water discharge tube 553 may wet the top surface of the filter 43 to move downward by passing through the filter 43. The filter 43 may be in a state in which the filter sufficiently absorbs the water in the process of moving the water downward. In addition, the water completely passing through the filter 43 may be stored in the water accommodation space 410 at the bottom of the case 41.

In addition, when driving the fan 51, air outside the plant cultivating apparatus 1 is introduced into the inlet duct 53 through the inflow hole 531. The external air flowing along the inlet duct 53 passes through the case opening 413b and the filter 43 in sequence. Here, the filter 43 is in a state in which the water is absorbed, and the air passing through the filter 43 may be humidified.

The humidified air passing through the filter 43 is directed to the outlet duct 52 while passing through the fan 51. In addition, the humidified air moving along the outlet duct 52 may be supplied to the cultivation space 100 through the discharge hole 521 defined in the top surface of the lower body 2.

The water supply of the tray part 33 and the operation of the fan 51 may be performed simultaneously and may be continued for a set time period to sufficiently humidify the cultivation space 100. In addition, an amount of humidification may be controlled by controlling an opening degree of the valve 54 and a rotation speed of the fan 51.

When the cultivation space 100 satisfies the set humidity, or an end of the operation of the humidification module 40 is input through the user's manipulation of the manipulation part 221, the valve 54 is closed, and the fan 51 is stopped.

Due to the operation of the humidification module 40, the humidity control within the cultivation space 100 may be possible, and ventilation through the inflow of the external air and supply of carbon dioxide necessary for photosynthesis may be smoothly achieved.

In addition to the foregoing embodiment, various embodiments may be exemplified. A second embodiment of the present invention is characterized in that the humidification module, the inlet duct, and the outlet duct are disposed in the upper body. The second embodiment of the present invention is identical to the foregoing embodiment in terms of the remaining configurations, except for the humidification module, the inlet duct, the outlet duct, and a portion of the water supply module, and thus, the same configurations are indicated using the same drawing reference numerals, and detailed descriptions and illustrations thereof are omitted.

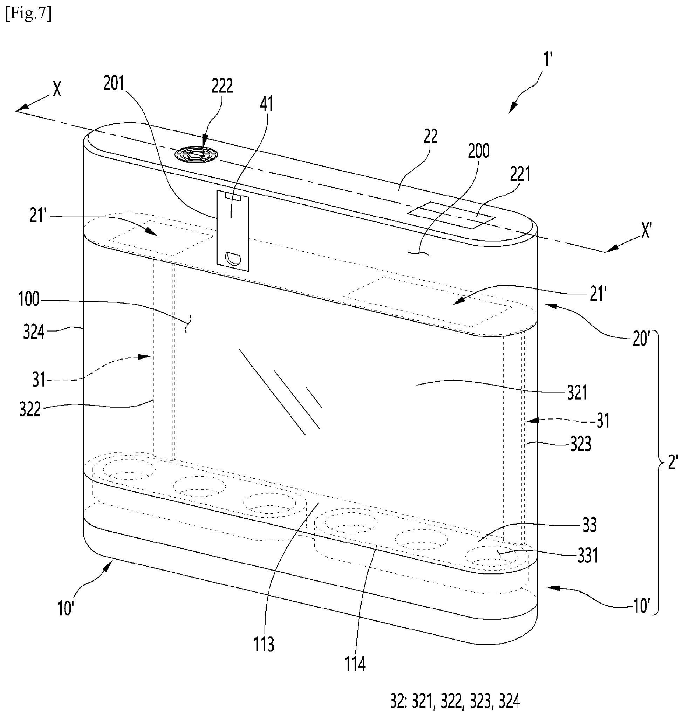

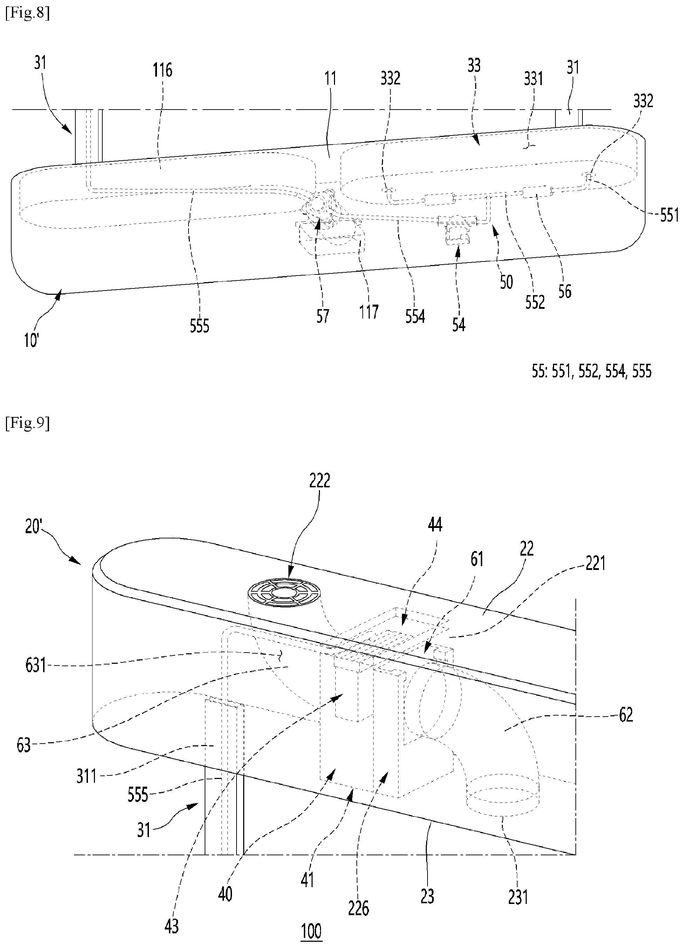

FIG. 7 is a perspective view of a plant cultivating apparatus according to a second embodiment of the present invention. In addition, FIG. 8 is a partial perspective view illustrating an internal structure of a lower body of the plant cultivating apparatus. In addition, FIG. 9 is a partial perspective view illustrating an internal structure of an upper body of the plant cultivating apparatus.

As illustrated in the drawings, a plant cultivating apparatus 1' according to a second embodiment of the present invention may be provided with a cultivation space 100 inside a body. In addition, the body 2' may include a lower body 10' providing a lower portion of the plant cultivating apparatus 1' and an upper body 20' providing an upper portion of the plant cultivating apparatus 1'.

In addition, the upper body 20' and the lower body 10' may be connected by a frame 31, and the upper body 20' and the lower body 10' may be disposed spaced apart from each other. A space between the upper body 20' and the lower body 10' may be defined as a cultivation space 100.

In addition, a cover 32 may be provided between the upper body 20' and the lower body 10'. The cultivation space 100 may be shielded by the cover 32. The cover 32 may be provided to be transparent. In addition, the cover 32 may include a front cover 321, a rear cover 322, and side covers 323 and 324. At least a portion of the cover 32 may be configured to be openable or detachable.

A tray part 33 may be provided in a top surface 113 of the lower body 10'. The tray part 33 may have at least one accommodation groove 331 that is recessed downward. A cultivation plant may be disposed inside the accommodation groove 331, and water supplied to the cultivation plant may be filled therein. The tray part 33 may be provided in plurality in the lower body 10'.

In addition, a water supply module 50 may be provided inside the lower body 10'. The water supply module 50 may be disposed below the tray part 33. The water supply module 50 may include a tube 55 that guides water within the tray part 33 and a valve 54 that is provided in the tube 55 to open and close the tube 55.

The tube 55 may be connected to a tube connection part 332 on the bottom of the tray part 33. The tube connection part 332 may be provided in plurality, and the tube 55 may be branched and connected to each of the tube connection parts 332. In addition, the tube 55 may be connected to a portion of the plurality of tray parts 33.

In addition, the water supply module 50 may further include a pump 57. The pump 57 may be configured to supply water to a humidification module 40 disposed in the upper body 20' and may be connected to the tube 55.

Referring to a connection structure of the water supply module 50 in more detail, the tube 55 may include a connection tube 551 connected to the tube connection part 332, a branch tube 552 in which the plurality of connection tubes 551 are connected to a single tube 55, a pump tube 554 connecting the valve 54 to the pump 57, and a water discharge tube 555 connected to the pump 57 to supply water to the humidification module 40. In addition, the tubes 551, 552, 554, and 555 may be connected to each other by a fitting 56. In addition, the valve 54 may be connected to an outlet of the branch tube 552 and an inlet of the pump tube 554. In addition, the pump 57 may be connected to the outlet of the pump tube 554 and an inlet of the water discharge tube 555.

The water discharge tube 555 may be guided from the lower body 10' to the upper body 20' through the frame 31. The water discharge tube 555 may extend to the upper body 20' through the inside of the frame 31 and may extend to an upper side of the humidification module 40. An outlet of the water supply module 50, i.e., an outlet of the water discharge tube 555 may be opened toward the top surface of the filter 43 at an upper side of the filter 43 Thus, water discharged from the water discharge tube 555 may fall downward and be supplied to the humidification module 40, i.e., the filter 43.

A lighting device 21' may be provided on a bottom surface of the upper body 20'. The lighting device 21' may irradiate light for plant cultivation into a cultivation space 100.

In addition, the humidification module 40 may be provided inside the upper body 20'. In addition, a body opening 201 through which the humidification module 40 enters may be defined in a front surface of the upper body 20'.

The humidification module 40 may have the same configuration as that in the foregoing embodiment, except for a structure and position of the humidification module 40. That is, the humidification module 40 may include a case 41 in which water drained from the water supply module 50 is stored, and a filter 43 disposed inside the case 41. The case 41 may be exposed through the body opening 201 so that a user detaches the humidification module 40 from the upper body 20'.

The humidification module 40 may further include a fan 61. The fan 61 may be mounted on a fan mounting part 226 disposed within the upper body 20. In addition, the fan 61 may be disposed at a position corresponding to the case opening 413 defined in the case 41. In addition, the fan may be disposed between the case 41 and the outlet duct 62 to allow the humidified air passing through the humidification module 40 to flow so that the humidified air is discharged into the cultivation space 100 through the outlet duct 62.

An inlet duct 63 may be mounted inside an upper body 20'. The inlet duct 63 may have an inlet positioned on a top surface 22 of the upper body 20'. In addition, the inlet of the inlet duct 63 may communicate with an external air inflow hole 222 defined in the top surface of the upper body 20'. The external air inflow hole 222 may be provided in a grill shape. In addition, the external air inflow hole 222 may be integrated with the inlet duct 63.

An outlet of the inlet duct 63 may communicate with the humidification module 40. The outlet of the inlet duct 63 may communicate with the case opening 413. Thus, the external air introduced through the inlet duct 63 may be guided to pass through the filter 43 in a state in which water is absorbed. The inlet duct 63 is provided in a round shape to allow the air to flow smoothly through the inlet and outlet of the inlet duct 63, which are disposed in a direction intersecting each other.

An outlet duct 62 may be mounted inside the upper body 20'. The outlet duct 62 may have an inlet that communicates with the humidification module 40. The inlet of the outlet duct 62 may communicate with an output side of the fan 61. In addition, the outlet of the outlet duct 62 may communicate with a bottom surface 23 of the upper body 20'. An discharge hole 231 may be defined in the bottom surface 23 of the upper body 20'. The discharge hole 231 may be provided in a grill shape, and the discharge hole 231 may be integrated with the outlet duct 62. The outlet duct 62 is provided in a round shape to allow the air to flow smoothly through the inlet and outlet of the outlet duct 62, which are disposed in a direction intersecting each other.

Hereinafter, the operation of the plant cultivating apparatus according to the second embodiment of the present invention, which has the above-described structure, will be described with reference to the drawings.

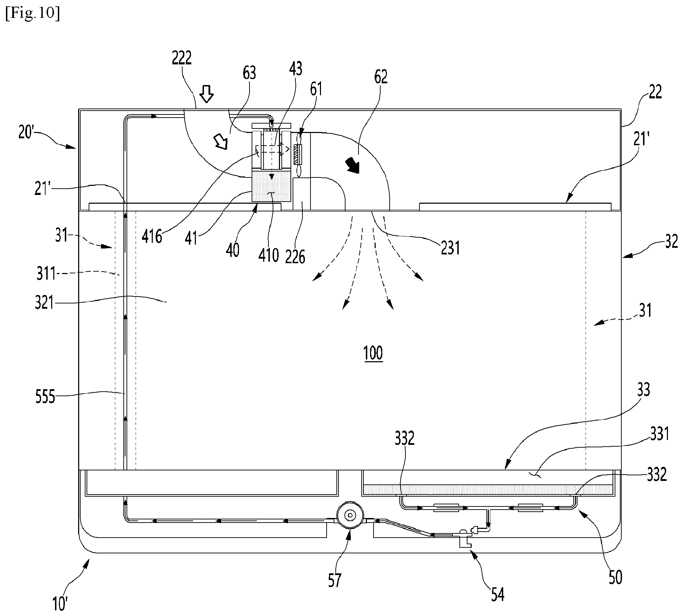

FIG. 10 is a cross-sectional view illustrating a humidified state of the plant cultivating apparatus.

As illustrated in drawings, the plant cultivating apparatus 1' may supply water to the tray part 33 for cultivation of plants. In addition, a plant for cultivation may be disposed in the tray part 33.

The water stored in the tray part 33 is used for growing plants, but may be supplied to the humidification module 40 in situations in which humidification is required. When an operation of the humidification module 40 is input, the valve 54 of the water supply module 50 may be opened, and the pump 57 may be driven. When driving the pump 57, the water stored in the tray part 33 may be supplied to the humidification module 40 disposed in the upper body 20' along the tube 55.

Here, the water discharge tube 555 may be guided from the lower body 10' to the upper body 20' through the inside of the frame 31. In addition, an outlet of the water discharge tube 555 may be disposed above the humidification module 40.

In addition, the outlet of the water discharge tube 555 is disposed above the filter cover 44 to supply water from an upper side of the filter 43. The water discharged from the outlet of the water discharge tube 555 may wet a top surface of the filter 43 to move downward along the filter 43. The filter 43 may be in a state in which the filter sufficiently absorbs the water in the process of moving the water downward. In addition, the water passing through the filter 43 may be stored within the case 41.

In addition, when driving the fan 61, air outside the plant cultivating apparatus 1 is introduced into the inlet duct 63 through the external air inflow hole 222. The external air flowing along the inlet duct 63 passes through a case opening 413 and the filter 43 in sequence. Here, the filter 43 is in a state in which the water is absorbed, and the air passing through the filter 43 may be humidified.

The humidified air passing through the filter 43 is directed to the outlet duct 62 while passing through the fan 61. In addition, the humidified air moving along the outlet duct 62 may be supplied to the cultivation space 100 through the discharge hole 231 defined in a bottom surface of the upper body 20'.

The water supply of the tray part 33 and the operation of the fan 61 may be performed simultaneously and may be continued for a set time period to sufficiently humidify the cultivation space 100. In addition, an amount of humidification may be controlled by controlling operations of the valve 54 and the pump 57 and a rotation speed of the fan 61.

In addition, due to the operation of the humidification module 40, the humidity control within the cultivation space 100 may be possible, and ventilation through the inflow of the external air and supply of carbon dioxide necessary for photosynthesis may be smoothly achieved.

In addition to the foregoing embodiment, various embodiments may be exemplified. A third embodiment of the present invention is characterized in that an outlet duct is disposed from a lower body to an upper body to supply humidified air from the upper body. The third embodiment of the present invention is the same as the foregoing embodiment in terms of the remaining configuration, except for a portion of the outlet duct, and thus, the same configuration may be denoted by the same drawing reference numerals, and its detailed description and illustration will be omitted.

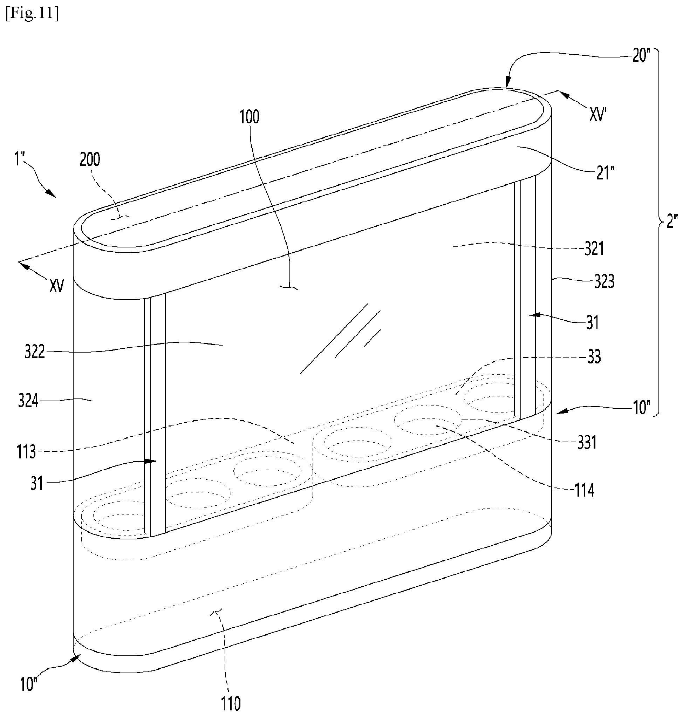

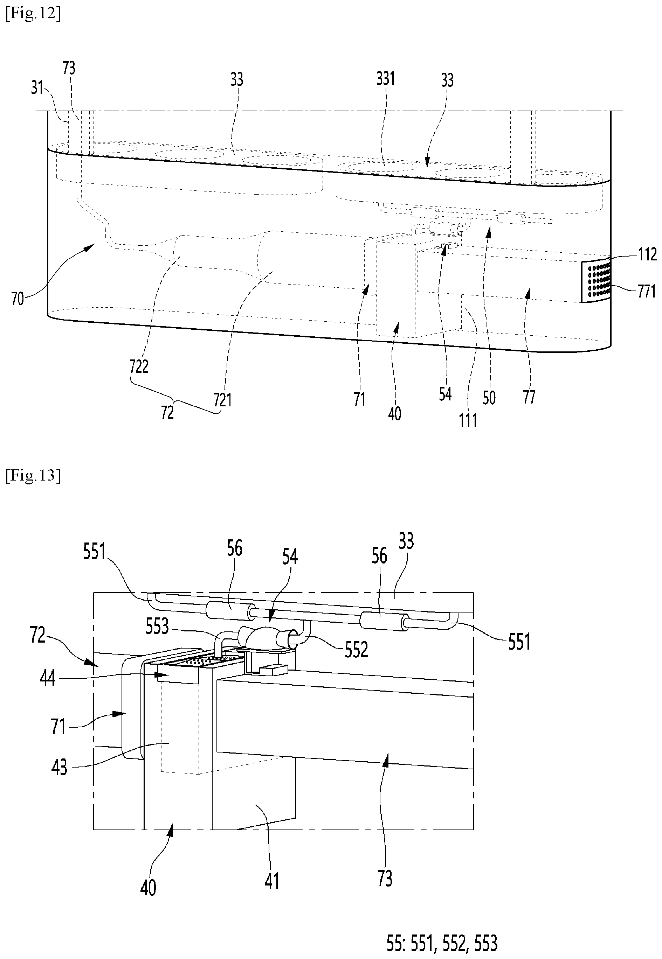

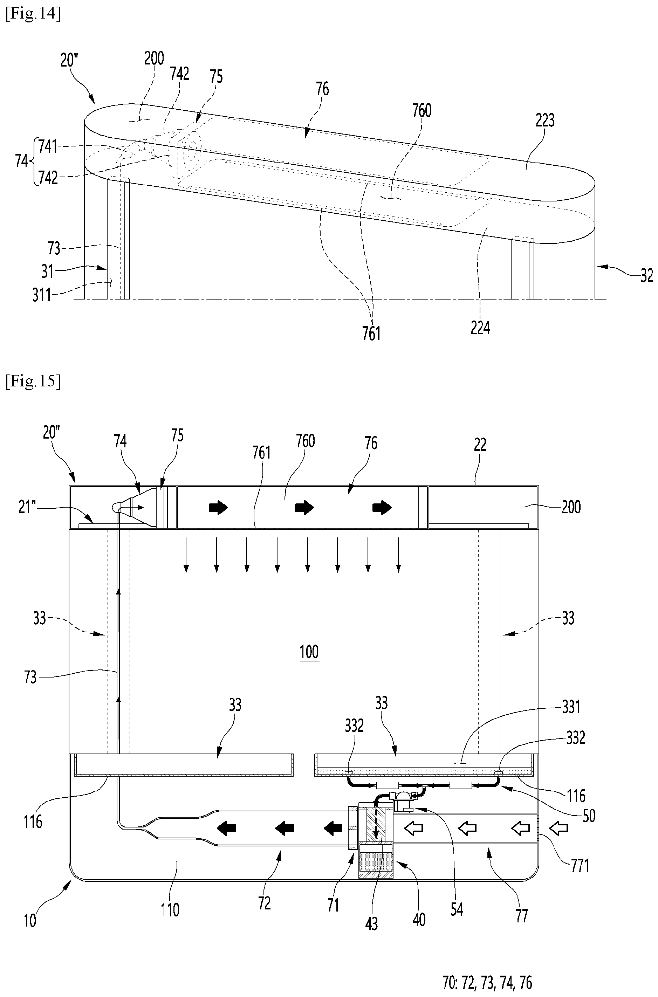

FIG. 11 is a perspective view of a plant cultivating apparatus when viewed from the rear according to a third embodiment of the present invention. In addition, FIG. 12 is a partial perspective view illustrating an internal structure of a lower body of the plant cultivating apparatus. In addition, FIG. 13 is a partial perspective view illustrating a water supply structure of a humidification module of the plant cultivating apparatus. In addition, FIG. 14 is a partial perspective view illustrating an internal structure of an upper body of the plant cultivating apparatus.

As illustrated in the drawings, a plant cultivating apparatus 1" according to a third embodiment of the present invention may be provided with a cultivation space 100 inside a body 2". In addition, the body 2" may include a lower body 10" providing a lower portion of the plant cultivating apparatus 1" and an upper body 20" providing an upper portion of the plant cultivating apparatus 1".

In addition, the upper body 20" and the lower body 10" may be connected by a frame 31, and the upper body 20" and the lower body 10" may be disposed spaced apart from each other. A cultivation space 100 may be defined between the upper body 20" and the lower body 10".

In addition, a cover 32 may be provided between the upper body 20" and the lower body 10". The cultivation space 100 may be shielded by the cover 32. The cover 32 may be provided to be transparent. In addition, the cover 32 may include a front cover 321, a rear cover 322, and side covers 323 and 324. In addition, at least a portion of the cover 32 may be configured to be openable or detachable.

A tray part 33 may be provided in a top surface of the lower body 10". The tray part 33 may have at least one accommodation groove 331 that is recessed downward. A cultivation plant may be disposed inside the accommodation groove 331, and water supplied to the cultivation plant may be filled therein. The tray part 33 may be provided in plurality in the lower body 10".

A water supply module 50, a humidification module 40, and an inlet duct 77 may be provided inside the lower body 10", In addition, the lower body 10" may be provided with a portion of an outlet duct 70.

In detail, the water supply module 50 may be disposed below the tray part 33. The water supply module 50 may include a tube 55 that guides water within the tray part 33 and a valve 54 that is provided in the tube 55 to open and close the tube 55.

The tube 55 may be connected to a tube connection part 332 on the bottom of the tray part 33. The tube connection part 332 may be provided in plurality, and the tube 55 may be branched and connected to each of the tube connection parts 332. In addition, the tube 55 may be connected to a portion of the plurality of tray parts 33.

Referring to a connection structure of the water supply module 50 in more detail, the tube 55 may include a connection tube 551 connected to the tube connection part 332, a branch tube 552 in which a plurality of connection tubes 551 are connected to a single tube, and a water discharge tube 553 connected to a valve 54 to supply water to the humidification module 40. In addition, the tubes 55 may be connected to each other by a fitting 56.

An outlet of the water discharge tube 553 may be disposed above the humidification module 40 and may be opened toward a top surface of the filter 43. Thus, water discharged from the water discharge tube 553 may be supplied to the filter 43 while falling downward.

The humidification module 40 may be provided inside the lower body 10". In addition, a body opening 211 through which the humidification module 40 enters may be defined in a front side of the lower body 10".

The humidification module 40 may be configured in the same manner as the foregoing embodiment. That is, the humidification module 40 may include a case 41 in which water drained from the water supply module 50 is stored, and a filter 43 disposed inside the case 41. The case 41 may be exposed through the body opening 211 so that a user detaches the humidification module 40 from the lower body 10".

The humidification module 40 may further include a fan 71. The fan 71 may be disposed inside the lower body 10". In addition, the fan 71 may be disposed at a position corresponding to the case opening 413 defined in the case 41. In addition, the fan 71 may be disposed between the case 41 and the outlet duct 70 to allow the humidified air passing through the humidification module 40 to flow so that the humidified air is discharged into the cultivation space 100 through the outlet duct 70.

An inlet duct 77 may be mounted inside the lower body 10". The inlet duct 77 may have an inlet disposed on a side surface of the lower body 10". In addition, the inlet of the inlet duct 77 may communicate with an external air inflow hole 771 defined in the side surface of the lower body 10". The external air inflow hole 771 may be provided in a grill shape. In addition, the external air inflow hole 771 may be integrated with the inlet duct 77.

An outlet of the inlet duct 77 may communicate with the humidification module 40. The outlet of the inlet duct 77 may communicate with the case opening 431. Thus, the external air introduced through the inlet duct 77 may be guided to pass through the filter 43 of the humidification module 40.

A portion of the outlet duct 70 may be mounted inside the upper body 20". The outlet duct 70 may have an inlet that communicates with the humidification module 40. The inlet of the outlet duct 70 may communicate with an output side of the fan 71. In addition, the rest of the outlet duct 70 may be disposed inside the frame 31 and the upper body 20".

In detail, the outlet duct 70 may include a first guide part 72 provided in the lower body 10", a second guide part 73 passing through the frame 31, and a third guide part 76 provided in the upper body 20".

The first guide part 72 may include a first part 721 communicating with the humidification module 40 and a second part 722 communicating with the second guide part 73 at an end of the first part 721. Each of the first part 721 and second part 722 may be provided in a cylindrical shape. In addition, the first part 721 may have an inner diameter greater than that of the second part 722 to minimize flow resistance of the humidified air discharged by the fan 71. In addition, the second part 722 may have an inner diameter less than that of the first part 721 and may be connected to an end of the second guide part 73.

The second guide part 73 may be provided in a tubular shape that is capable of passing through the inside of the frame 31. The inner diameter of the second guide part 73 may be less than that of each of the first guide part 72 and the second guide part 73. The second guide part 73 guides the humidified air that is not supplied through the first guide part 72 from the lower body 10" to the upper body 20".

The third guide part 76 may be disposed inside the upper body 20" and be in contact with a bottom surface of the upper body 20". **In** addition, an inner width of the upper body 20" may be greater than that of each of the first guide part 72 and the second guide part 73.

The third guide part 76 may communicate with the second guide part 73 and may be provided in a tubular shape with a bottom surface opened. The third guide part 76 may define a space 760 through which the humidified air flows. The third guide part 76 may extend along the bottom surface of the upper body 20". For example, the third guide part 76 may be disposed at a center of the bottom surface of the upper body 20" and extends to both sides to have a predetermined length so as to enable uniform supply of the humidified air to the top surface of the cultivation space 100.

**In** addition, the opened bottom surface of the third guide part 76 may communicate with a discharge hole 761 defined in the bottom surface of the upper body 20". The discharge hole 761 may extend along the bottom surface of the upper body 20". The discharge hole 761 may extend in a longitudinal direction of the third guide part 76, and the plurality of discharge holes 761 may be spaced apart from each other. For example, the discharge holes 761 may be configured as a pair spaced apart in a forward and backward direction. **In** addition, the discharge hole 761 may be defined to extend from one end to the other end of a bottom surface of the third guide part 76. In addition, the discharge hole 761 may be integrated with the outlet duct 70.

An expansion part 74 may be further provided between the second guide part 73 and the third guide part 76. The expansion part 74 may connect the second guide part 73 having a narrow diameter to the third guide part 76 having a large inner width. The expansion part 74 may be provided so that the inner diameter gradually increases from an inlet connected to the second guide part 73 to an outlet toward the third guide part 76. The expansion part 74 may include a first expansion part 741 and a second expansion part 742. The first expansion part 741 may be connected to the second guide part 73 and may have an inner diameter greater than that of the second guide part 73. In addition, the second expansion part 742 may connect the first expansion part 741 to the third guide part 76 and may have an inner diameter greater than that the first expansion part 741 and less than that of the third guide part 76. The expansion part 74 may be configured to be integrated with the second guide part 73.

A sub-fan 75 may be additionally provided between the outlet of the expansion part 74 and the third guide part 76. The sub-fan 75 may ensure that the humidified air of the second guide part 73 having a narrow passage is smoothly supplied to the third guide part 76. When driving the sub-fan 75, the humidified air inside the second guide part 73 is suctioned and supplied to the third guide part 76 and then be discharged into the cultivation space 100.

The sub-fan 75 may have a box fan structure. In addition, the sub-fan 75 may be driven simultaneously with the fan 71. In addition, the sub-fan 75 may be mounted on the inlet of the third guide part 76.

A lighting device 21" may be provided on a bottom surface of the upper body 20". The lighting device 21" may extend along between the pair of the discharge holes 761. The lighting device 21" may irradiate light for plant cultivation into the cultivation space 100.

Hereinafter, the operation of the plant cultivating apparatus 1" according to the third embodiment of the present invention having the above-described structure will be described with reference to the drawings.

FIG. 15 is a cross-sectional view illustrating a humidified state of the plant cultivating apparatus.

As illustrated in the drawings, the plant cultivating apparatus 1" may supply water to the tray part 33 for cultivation of plants. In addition, a plant for cultivation may be disposed in the tray part 33.

The water stored in the tray part 33 is used for growing plants, but may be supplied to the humidification module 40 in situations in which humidification is required. When the operation of the humidification module 40 is determined, the valve 54 may be opened. When the valve 54 is opened, the water stored in the tray part 33 moves downward along the tube 55 due to its own weight.

In addition, the outlet of the tube 55 is disposed above the filter cover 44 to supply water from an upper side of the filter 43. The water discharged from the water discharge tube 553 may wet the top surface of the filter 43 to move downward along the filter 43. The filter 43 may be in a state in which the filter sufficiently absorbs the water in the process of moving the water downward. In addition, the water passing through the filter 43 may be stored within the case 41.

In addition, when driving the fan 71, air outside the plant cultivating apparatus 1" is introduced into the inlet duct 77 through the external air inflow hole 771. The external air flowing along the inlet duct 77 passes through a case opening 413 and the filter 43 in sequence. Here, the filter 43 is in a state in which the water is absorbed, and the air passing through the filter 43 may be humidified.

The humidified air passing through the filter 43 is directed to the outlet duct 70 while passing through the fan 71. In addition, the humidified air moving along the outlet duct 70 may be supplied to the cultivation space 100 through the discharge hole 761 defined in a bottom surface of the upper body 20''.

In detail, the humidified air discharged from the humidification module 40 by driving the fan 71 flows sequentially to the second guide part 73 and the third guide part 76. In addition, the sub-fan is driven together with the fan 71 to further force the flow of the humidified air. That is, the sub-fan 75 is driven to allow the humidified air to flow smoothly through the inside of the second guide part 73 of which a diameter is further narrowed to pass through the frame 31.

When driving the fan 71 and the sub-fan 75, the humidified air generated in the lower body 10" may be guided to the upper body 20" by the first guide part 72 and the second guide part 73. In addition, the humidified air may be supplied from the bottom surface of the upper body 20" to the inside of the cultivation space 100 by the third guide part 76.

The water supply of the tray part 33 and the operation of the fan 71 and the sub-fan 75 may be performed simultaneously and may be continued for a set time period to sufficiently humidify the cultivation space 100. In addition, the amount of humidification may be controlled by controlling an opening degree of the valve 54 and a rotation speed of each of the fan 71 and the sub-fan 75.

Due to the operation of the humidification module 40, the humidity control within the cultivation space 100 may be possible, and ventilation through the inflow of the external air and supply of carbon dioxide necessary for photosynthesis may be smoothly achieved.

In addition to the foregoing embodiment, various embodiments may be exemplified. A fourth embodiment of the present invention is characterized by having a structure in which a separate water storage unit is provided in which water supplied to the humidification module is stored. The fourth embodiment of the present invention is the same as the foregoing embodiment in terms of the remaining configuration, except for a water storage unit and a water supply module, and thus, the same configurations may be denoted by the same drawing reference numerals, and its detailed descriptions and illustrations will be omitted.

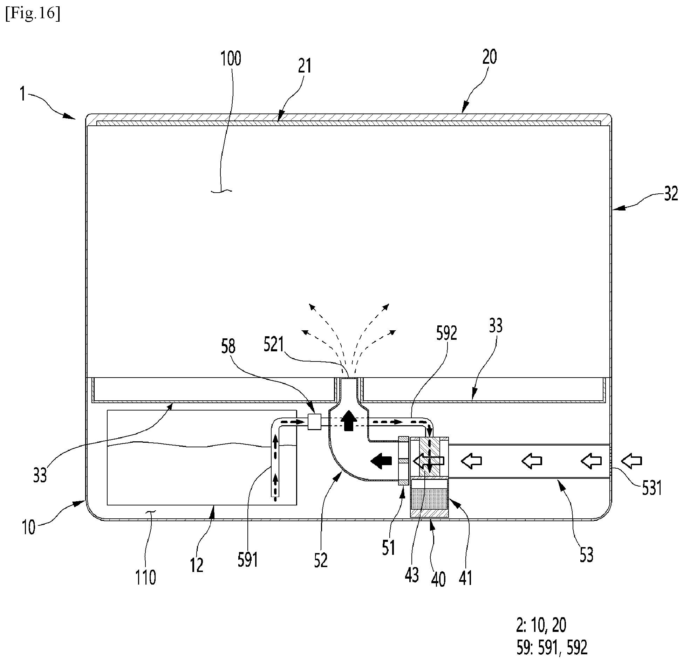

FIG. 16 is a cross-sectional view illustrating a structure and a humidified state of a plant cultivating apparatus according to a fourth embodiment of the present invention.

As illustrated in the drawings, a plant cultivating apparatus 1 according to a fourth embodiment of the present invention may include a body 2 defining a cultivation space 100. In addition, the body 2 may include a lower body 2 in which a humidification module 40 and a tray part 33 for plant cultivation are disposed. In addition, the cultivation space 100 may be provided above the lower body 2.

The plant cultivating apparatus 1 may include a cover 32. In addition, the cultivation space 100 may be separated from an external space by the cover 32. The cover 32 may be provided transparently so that the inside is seen therethrough. In addition, the cover 32 may be provided in plurality.

The body 2 may include an upper body 2. The upper body 2 may be provided above the lower body 2, and the cultivation space 100 may be defined between the upper body 2 and the lower body 2. The upper body 2 may be provided with a lighting device 21 that irradiates light into the cultivation space 100. In addition, at least a portion between the upper body 2 and the lower body 2 may be shielded by the cover 32.

A humidification module 40 for humidifying the cultivation space 100 may be provided in an internal space 110 of the lower body 2. The humidification module 40 may be configured to humidify the inside of the cultivation space 100 and may be connected to an inlet duct 53 and an outlet duct 52. In addition, a fan 51 may be provided at one side of the inlet duct 53 or outlet duct 52 to force an air flow in the inlet duct 53, the outlet duct 52 and the humidification module 40. The humidification module 40, the inlet duct 53, the outlet duct 52, and the fan 51 may be called a humidifying device or an evaporative humidifying device.

An opened one end of the outlet duct 52 may communicate with an external air inflow hole 531 opened at the outside of the lower body 2, and the other opened end of the outlet duct 52 may communication with the humidification module 40. In addition, the opened one end of the outlet duct 52 may communicate with the outlet 521 opened toward the cultivation space 100, and the other end may be directed toward the humidification module 40. In addition, the fan 51 may connect the outlet duct 52 to the humidification module 40. Both the inlet 531 and outlet 521 may be provided in the lower body 20.

The humidification module 40 may have the same structure as that in the foregoing embodiment. That is, the humidification module 40 may have a structure in which the filter 43 is provided inside the case 41, and may be configured so that water supplied from an upper side wets the filter 43. In addition, the water passing through the filter 43 may be stored in a lower portion of the humidification module 40. In addition, the case 41 may communicate with the inlet duct 53 and the outlet duct 52. Thus, when the fan 51 is driven, external air may be humidified as it passes through the filter 43 and then supplied to the cultivation space 100.

The humidification module 40 may be detached from the lower body 2. For example, the humidification module 40 may be inserted and mounted into an opened side of the lower body 2 or may be detached.

The lower body 2 may be further provided with a water tank 12. The water tank 12 stores the water supplied to the humidification module 40. Thus, the water tank 12 may be called a water storage unit. The water tank 12 may be configured independently of the tray part 33. In addition, the water tank 12 may have a structure of which at least a portion is exposed to the outside of the lower body 2 and may enable a user to supply water. As another example, the water tank 12 may be configured to be connected to the tray part 33 so that water is supplied through the tray part 33.

For example, the water tank 12 may be provided below the tray part 33. In addition, the water tank 12 may be provided with a water supply module 59. The water supply module 59 may include a suction tube 591 extending into the water tank 12 and a water discharge tube 592 supplying the water from an upper side of the humidification module 40 to the filter 43. In addition, the water supply module 59 may include a pump 58 connected to the suction tube 591 or the water discharge tube 592.

Thus, in order to humidify the cultivation space 100, the pump 58 is driven to supply the water from the water tank 12 to the humidification module 40. The water supplied through the water supply module 59 wets the filter 43.

In addition, when the fan 51 is driven, external air is introduced through the inlet duct 53 to pass through the humidification module 40. The humidified air passing through the filter 43, into which the water is supplied, may be supplied to the cultivation space through a discharge hole of the outlet duct.

### INDUSTRIAL APPLICABILITY

The plant cultivating apparatus according to the embodiments of the present invention may improve the plant cultivation environment and enhance the usability, and thus, industrial applicability is high.

## Claims

1. A plant cultivating apparatus comprising:
a body in which a cultivation space is defined;
a water storage unit provided in the body;
a humidification module provided at one side of the body that is separated from the cultivation space;
a water supply module configured to supply water from the water storage unit to the humidification module;
an inlet duct connected to one side of the humidification module to supply air to the humidification module;
an outlet duct connected to the other side of the humidification module to discharge air passing through the humidification module to the cultivation space; and
a fan provided in the body to force an air flow in the humidification module, the inlet duct, and the outlet duct,
wherein, when the fan is driven, the air introduced through the inlet duct is humidified while passing through the humidification module and then is supplied to the cultivation space through the outlet duct.

2. The plant cultivating apparatus according to claim 1, wherein the humidification module comprises a filter into which the water supplied from the water storage unit is absorbed.

3. The plant cultivating apparatus according to claim 2, wherein an outlet of the water supply module is provided above the filter to supply the water downward.

4. The plant cultivating apparatus according to claim 2, wherein the humidification module is disposed between the inlet duct and the outlet duct, and
the outlet duct and the inlet duct are disposed in a direction crossing a flowing direction of the water flowing along the filter.

5. The plant cultivating apparatus according to claim 1, wherein the water storage unit comprises a tray part recessed from a top surface of the body and exposed to the cultivation space so that a plate to be grown is disposed, and
the water supply module is connected to the tray part.

6. The plant cultivating apparatus according to claim 1, wherein an external air inflow hole through which air outside the body is introduced into the inlet duct is defined in one surface of the body, and
a discharge hole through which humidified air of the outlet duct is supplied into the cultivation space is defined in the other surface of the body, which is in contact with the cultivation space.

7. The plant cultivating apparatus according to claim 1, wherein the humidification module comprises:
a case in which the water supplied from the water supply module is stored; and
a filter accommodated in the case to absorb the water supplied from the water supply module,
wherein a case opening through which the filter is exposed is defined in each of both facing surfaces of the case, and
the case opening communicates with each of the inlet duct and the outlet duct.

8. The plant cultivating apparatus according to claim 7, wherein a filter cover having a plurality of holes, through which water discharged from the water supply module passes, is provided above the filter,
wherein the filter cover is provided to be gradually lower toward both sides from a central portion facing an outlet of the water supply module.

9. The plant cultivating apparatus according to claim 7, wherein a body opening, through which the case is exposed, is defined at one side of the body, and
the case is inserted and withdrawn through the body opening.

10. The plant cultivating apparatus according to claim 1, wherein the body comprises:
a lower body on which the tray part is disposed;
an upper body disposed to be spaced upward from the lower body and provided with a lighting device configured to illuminate light toward the lower body; and
a frame configured to connect the upper body to the lower body,
wherein the cultivation space is defined between the upper body and the lower body.

11. The plant cultivating apparatus according to claim 10, wherein a cover made of a transparent material is provided between the upper body and the lower body,
wherein the cover is configured to shield at least a portion of the cultivation space.

12. The plant cultivating apparatus according to claim 10, wherein the water supply module and the humidification module are provided inside the lower body, and
the inlet duct and the outlet duct are provided in the lower body, wherein an inlet of the inlet duct is provided in a side surface of the lower body, and an outlet of the outlet duct is provided in a top surface of the lower body.

13. The plant cultivating apparatus according to claim 10, wherein the water supply module is provided in the lower body, wherein tubes constituting the water supply module pass through the frame and are guided to the upper body,
the humidification module, the inlet duct, and the outlet duct are provided in the upper body, and
an inlet of the inlet duct and an outlet of the outlet duct are provided in the upper body.

14. The plant cultivating apparatus according to claim 10, wherein the water supply module, the humidification module, and the inlet duct are provided in the lower body,
the outlet duct comprises a first guide part disposed in the lower body, a second guide part passing through the frame, and a third guide part disposed in the upper body, and
an inlet of the inlet duct is provided in the lower body, and an outlet of the outlet duct is provided in the upper body.

15. The plant cultivating apparatus according to claim 1, further comprising a tray part recessed from a top surface of the body and exposed to the cultivation space,
wherein the water storage unit comprises a water tank disposed independently of the tray part, and
the water supply module is connected to the water tank.
